# EUROPEAN PATENT APPLICATION

(11) **EP 3 620 057 A1**
(43) Date of publication of application: **11.03.2020**
(21) Application number: 18794186.9
(22) Date of filing: 04.05.2018
(51) Int. Cl.: A23B 7/157

(54) **METHOD FOR THE OPTIMISATION OF ORGANOLEPTIC PROPERTIES IN VEGETABLE PRODUCTS CONTAINING CHLOROPHYLLOUS PIGMENTS**

(30) Priority: 05.05.2017 ES 201730660
(71) Applicant: Consejo Superior De Investigaciones Científicas, 41013 Sevilla (ES)
(72) Inventor: GANDUL ROJAS, Beatriz, 41013 Sevilla (ES); VERGARA DOMÍNGUEZ, Honorio, 41013 Sevilla (ES); GALLARDO GUERRERO, Mª Lourdes, 41013 Sevilla (ES)
(74) Representative: Pons Ariño, Angel
(86) International application number: PCT/ES2018/070340
(87) International publication number: WO 2018/202932

(57) **Abstract**

The present invention relates to a process enabling the optimisation of the organoleptic properties, particularly the colour, of vegetal products containing chlorophyll pigments, comprising a pheophytinisation treatment of the vegetal products, a treatment with a solution having a pH higher than 5, and a treatment with at least one divalent metal compound.

## Description

### FIELD OF THE INVENTION

The present invention falls within the field of agri-food technology. Specifically, it relates to a process that enables the optimisation of organoleptic properties, in particular the colour, in vegetal products containing chlorophyll pigments. To this end, one commences with known techniques such as the treatment with compounds containing divalent metals, in particular Zn, improving the results obtained by means of a pheophytinisation treatment of the chlorophyll compounds.

Thus, products with a permanent brilliant green colour are obtained, enriched with the divalent metal, in particular zinc, with no need to surpass 100% of the reference value (NRV) of mineral nutrient per 100 g of product, and at the same time maintaining other organoleptic characteristics unchanged, such as taste.

### STATE OF THE ART

In view of the increasing demand for select, quality products, innovation in the sector of vegetal products containing chlorophyll pigments in general, and table olives in particular, is directed toward traditional products with organoleptic characteristics that are highly appreciated by the consumer, but to date with a very localised trade, due to the limited useful life of the same.

The olive is a drupe with a characteristic bitter taste due to the glucoside oleuropein. In its processing as a table olive, the elimination of this bitter component is the fundamental stage that enables the obtaining of a more appetising product. In accordance with the variety, the level of ripeness and the type of fruit (whole or cut), this process is more or less intense, there existing consequently a wide range of types of preparation. The processes employing a treatment with a diluted alkaline solution to hydrolyse the oleuropein are the most widespread worldwide, as are the *"Spanish style"* green olives or the *"Californian style"* oxidised black olives.

In the *Spanish* or *Sevillian style,* subsequent to the alkaline hydrolysis of the bitter components, the fruits are prepared in brine, wherein they undergo a lactic-acid fermentation process and acquire their valued organoleptic characteristics. However, currently other preparations of green olives are gaining significance, described as "specialities", and which include an alkaline treatment of the fruits, but not a fermentation stage. They have specific characteristics and names in different producer countries: *Campo Real* in Spain, *Castelvetrano* in Italy, *Picholine* in France, and *Californian style* green olives or *Green ripe olives* in the United States. In addition to their mild, slightly alkaline taste, one of the most desirable and highly-appreciated organoleptic characteristics of these products is a brilliant green colour, as similar as possible to that of the fresh fruit, which the consumer tends to associate with a more natural, less prepared product.

Unfortunately, during the preservation stage the colour changes significantly, obtaining a product with a colour very unlike the "natural green" expected by the consumer/producer. In Spain a number of studies have been performed directed toward the implementation of an industrial process for this type of specialities (Brenes and Garcia, "Elaboración de aceitunas denominadas green ripe olives con variedades españolas" [Preparation of olives known as green ripe olives with Spanish varieties]. Grasas Aceites (2005) 56, 188-19; Casado, Sanchez, Rejano and Montaño. "Estudio de nuevos procedimientos de elaboración de aceitunas verdes tratadas con álcali, no fermentadas, conservadas mediante tratamientos térmicos" [Study of new preparation processes for green olives treated with alkali, unfermented, preserved by means of heat treatments]. Grasas y Aceites (2007) 58, 275-282). All these preparations of olives not including fermentation have in common a relatively high pH in the pulp which requires, according to the Quality Standards governing the trade of table olives [Codex Alimentarius Comission (FAO/WHO) (1981) Codex Standard for table olives (Codex Stan 66-1981), Revision 1987], the application of a heat treatment to guarantee their long-term preservation.
Unfortunately, all the heat preservation treatments necessary to guarantee the safety of the product adversely affect the colour, which changes from brilliant green to a yellowish hue, similar to that produced during the fermentation of *Spanish style* green olives, and eliminating the differentiation intended between the two commercial products.

The colour of the olive, as with all green fruits and vegetables, is due to the presence of chlorophylls a and b, found in the chloroplasts linked to carotenoids. The striking change in colour from bright green to olive-brown, which generally occurs in the heat processing of vegetal products, is due to the release of cellular acids during heating, which causes the reaction replacing the central Mg ion of the chlorophyll molecule by 2H⁺, modifying the characteristics of the chromophore group, with the subsequent colour change:

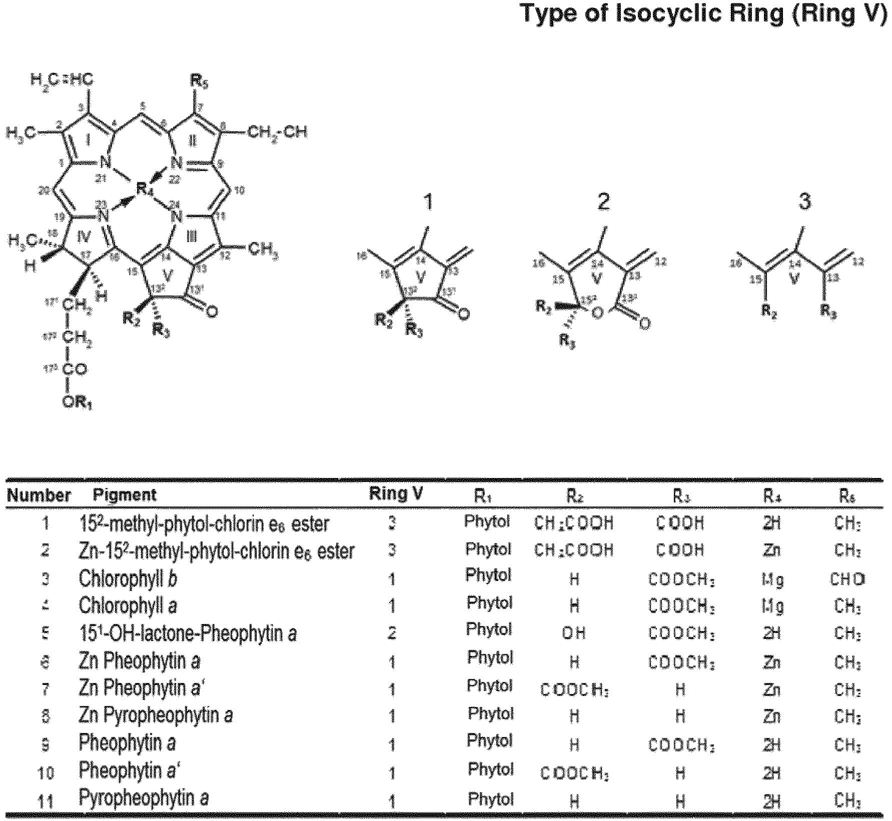

All the processing systems to which green fruits and vegetables are subjected cause, to a greater or lesser extent, the formation of different Mg-free chlorophyll derivatives, mainly pheophytins, pyropheophytins and pheophorbides, all of which are grey-brown in colour.

Since long ago, the efforts of the food industry to preserve the green colour in thermally processed green vegetal products by means of the use of alkalising agents, which decrease acidity, or with high-temperature short time (HTST) heat treatments have been well known. These processes obtain a short-term improvement in the colour, but do not maintain the green colour during storage.

Conversely, the processes that take advantage of the high binding affinity of some divalent metals, such as Cu (II) and Zn (II), with the porphyrin ring, to form highly stable metallic complexes and a bright green colour (US 4473591), are successful. In addition to copper and zinc chelates, chlorophylls can form green-coloured metallic complexes with many other divalent metals, such as calcium, iron and manganese (Clarke and Frank "Investigation of the effect of metal substitution on the triplet state of chlorophyll by optically detected zero-field magnetic resonance", Chemical Physics Letters 1977, 51 (1), 13-17; Nelson and Ferruzzi "Synthesis and Bioaccessibility of Fe-Pheophytin Derivatives from Crude Spinach Extract". J. Food Sci. 2008, 73(5) 86-91; Li and Inoue "Preparation and Determination of Manganese (III) Chlorophylls by Reversed-Phase High Performance Liquid Chromatography". Chromatographia 1992, 33 (11/12) 567-570). A patent is known concerning a process utilising iron chlorophyllin for the prevention and treatment of body disorders caused by active oxygen (JPH04327534), but to date there is no reference to any process using these nutrients for the stabilisation of the green colour in food technology.

Likewise, calcium, magnesium, iron, copper, zinc and manganese are essential mineral nutrients whose use is authorised for the fortification of foodstuffs, both in the EU (EC Regulation No 1170/2009), and in the USA (Code of Federal Regulations Title 21, Vol. 2; Rev. April 1, 2016), provided that the mineral added is to be found in a significant quantity of at least 15% of the nutrient reference value (NRV) in 100 g. The copper and zinc content in preserved green fruits and vegetables is at least 0.3-0.4 mg per 100 g, doubling this value in beans and peas. In the case of copper, this content represents at least 30-40% of the reference value of this nutrient (NRV = 1 mg/day), the enrichment of the product with this mineral not being justified. Conversely, enrichment of the vegetal product with zinc can be justified, as the NRV thereof is ten times higher (10 mg/day), its average content in fruits and vegetables representing only 0.3-0.4% of the NRV.

Other minerals such as calcium, magnesium, iron and manganese are in a similar situation. With reference values of 800, 375, 14 and 2 mg/day respectively, the average content of these nutrients in the majority of preserved vegetable products, and specifically in olives and beans, does not exceed 11% of the NRVs, which would justify the fortification of these vegetal foodstuffs with some of these nutrients.

On the other hand, private studies in the specific table olive sector have revealed the mass presence of Cu (II) metallochlorophyll complexes of a liposoluble nature in commercial green table olives with a striking bright green colour and labelled as *"Olives in Soda"* and *"Castelvetrano"* style. Studies performed by the inventors have revealed that the formation of these complexes is the result of the addition of Cu (II) salts (Gandul-Rojas and Gallardo-Guerrero "Pigment changes during preservation of green table olive specialities treated with alkali and without fermentation: effect of thermal treatments and storage conditions" Food Research International 2018, 108, 57-67). This is therefore an incorrect preparation practice, as the EU positive list of food additives does not include any copper salt, nor is its use justified as a fortification or restoration strategy. Specifically, copper sulphate and copper gluconate are substances that are "generally recognised as safe" (GRAS) in American legislation, but their use is only allowed as a food supplement or processing adjuvant. In the International Olive Council (IOC) standard applicable to table olives and governing their international trade, copper salts are not included in the list of technological adjuvants (Trade Standard Applying to Table Olives. IOC/OT/NC No. 1. Madrid, Spain 2004 (http://www.internationaloliveoil.org/estaticos/view/222-standards).

However, zinc acetate is permitted as a food additive in the EU (E-650), although its use is specifically restricted to chewing gum. In the case of table olives, although its use as an additive is not yet permitted, processes have already been patented describing its use as an antimicrobial preservative (patent ES2369183).

Although in general, the rate of the reaction of formation of the Zn (II) metallochlorophyll complexes is slower than that of those corresponding to Cu (II), several useful processes employing these Zn salts to preserve the green colour in different processed vegetables have been patented:
US4473591 proposes blanching with Zn and/or Cu salts in sufficient quantity to retain the green colour (between 50 and 500 ppm) at a temperature between 65°C and 100°C, followed by a preservation treatment comprising sterilisation between 115°C and 150°C in containers whose inner surface is treated with alkaline earth metals. The addition of the divalent metal in the blanching stage enables the prevention of the uncontrolled re-greening that arises during the prolonged storage of similar products obtained by means of processes wherein the metal is added to the brine in the packaging, thus preventing the development of undesired ammonia odours caused by the use of alkaline solutions in the packaging. Although this is one of the few patents in this field that has become commercial, it presents the drawbacks of both difficult control of the quantity of metal in the final product and the nonuniformity of the green colour.

Document US 4701330 relates to a process for the retaining of the green colour of vegetables, comprising the stages of: (a) blanching the vegetables at a temperature between 150 °F and 212 °F (66-100°C); (b) subjecting the vegetables to a vacuum pressure during a period of time sufficient to eliminate the entire layer of air covering the surface of said vegetables; (c) completely submerging the green vegetables under vacuum in alkaline water under deaerated conditions, said solution having a pH of between 7.2 and 9.5, during a period of time varying between 5 and 30 minutes; and (d) draining the vegetables and storing them at refrigerated temperatures between 32 °F and 45 °F (0 to 7°C) for a period of time of up to 21 days. This process enables an increase in the retaining of the green colour in blanched vegetables by means of the use of alkaline solutions and separating the oxygen from the surface of the vegetable. It is a question of preventing the discolouration of the chlorophylls by oxidation during their refrigerated storage.

EP 0314298A discloses a process for the preservation of the colour and texture of a vegetal product by means of the treatment of the vegetal matter containing chlorophyll with an aqueous alkaline solution containing cations of one or more metals selected from magnesium, zinc or copper, for the purpose of forming the alkaline chlorophyll salts (chlorophyllins). This is a question of applying prior knowledge to the preparation of vegetable paste. Although it discloses the use of alkaline solutions of divalent metals, in no case is the formation of chlorophyll complexes with divalent metals intended, nor is any pheophytinisation pre-treatment indicated to increase the efficacy of the process.

Document US 6004601 describes a method for the retaining of the green colour and the improvement of the texture in raw or frozen vegetables, comprising the submerging of the vegetables in an aqueous solution of zinc during three minutes or less, the aqueous solution having a concentration of zinc ions of at least approximately 500 ppm. Furthermore, it comprises the pre-treatment of the green vegetables with a solution in which the fresh vegetable is blanched for approximately 2 to 60 minutes at approximately 125 to 155 degrees F, (52 to 100°C) in water, or in an aqueous solution with or without a food-grade calcium salt, and with or without a food-grade acid solution, or both; and optionally, the incubation of the blanched vegetables for approximately 0 to 90 minutes at a temperature of up to approximately 155 degrees F (68°C). The process of the present invention provides significant improvements regarding this document, as it enables a considerable increase in the efficiency of the reaction of complexing the chlorophyll derivatives with the divalent metal, and the obtaining of an ideal product, such as with green beans (examples 9 and 10), adding a much lower quantity of zinc (200 ppm) and applying a less aggressive heat preservation treatment (pasteurisation).

Other documents, such as US 5114725A or US 5482727, add the divalent metal to the brine in the packaging of the blanched vegetables. In the first case, a product is obtained with improved colour and taste characteristics, by means of the maintenance of the preserved vegetable at a high temperature during a certain time and employing a solution containing zinc and/or copper ions in contact with the vegetable within the tin. The hermetically sealed tin, with the vegetables and this solution of brine, is maintained at a high temperature prior to being subjected to multiple heat treatments, at least one of these reaching commercial sterilisation. The innovation propounded by document US 5482727 is to replace the normal 3-minute blanching by a prolonged 20- to 30-minute blanching. The extension of the blanching enables the increasing of the cell damage and the increasing of the permeability, improving the subsequent capture of the zinc in the packaging and the formation of the metallochlorophyll complexes responsible for the re-greening. Both processes control the total concentration of zinc in the finished product better than process US 4473591; however, the required addition of metal to the packaging may bring about an uncontrolled additional re-greening when the product is stored for a lengthy period of time, endowing the vegetable with an inconsistent colour which the consumer may associate with low quality and questionable freshness.

US 6210729 B1 describes a process for the preparation of a vegetal composition with an improved green colour. The method comprises adding to "a processed green vegetable" (containing pheophytins and pyropheophytins) at least one zinc salt from a fatty acid in an effective quantity of zinc of 75 ppm (w/v) or less, and wherein the zinc salt has low water solubility. Among others, one drawback of this process is that it cannot be applied in the EU, as the use of zinc salts from fatty acids, such as zinc stearate, is not permitted.

In the document by Ngo and Zhao "Retaining green pigments on thermally processed peels-on green pears", Journal Food Science 70 (2005) C568-74, a process similar to that of US patent 4473591 is optimised for its application in green pears thermally processed by means of pasteurisation. It consists of using zinc salts as processing coadjuvants in the blanching process, together with a pre-treatment of the surface of the fruit by means of manual scraping with knives or the sprinkling of sugar to eliminate the waxes and part of the cuticle layer. Although this pre-treatment facilitates the insertion of the metal into the porphyrin ring of the chlorophylls, to obtain a product with a permanent green colour it is necessary to use zinc solutions with a concentration greater than 1300 ppm, with a fruit:zinc solution ratio of 1:2.5 (3250 mg per kg of product). In the work by Canjura and coll. "Color Improvement and Metallo-chlorophyll Complexes in Continuous Flow Aseptically Processed Peas" Journal Food Science 64 (1999) 987-990, the improved absorption of zinc ions is achieved, as is consequently the stabilisation of the colour of tinned peas, replacing the conventional blanching by a continuous aseptic processing system (HTST) with a hot flow of Zn₂Cl.

The document by Zheng and coll. "Effect of heat treatment, pH, sugar concentration, and metal ion addition on green colour retention in homogenized puree of Thompson seedless grape" Food Science and Technology 55 (2014) 595 - 603 describes a study performed to investigate the stability of chlorophyll pigments in a vegetal product based on seedless grapes under different conditions of temperature, pH, and different concentrations of zinc ions, with the aim of determining the optimal conditions to retain the green colour of the chlorophyll pigments; however, a specific process wherein the three treatments are mixed simultaneously is not disclosed.

Finally, the document by Scipioni, del Valle Argüello and Schmalko "The Effect of Mg2+, Cu2+ and Zn2+ Pre-treatment on the Color of Yerba Mate (Ilex paraguariensis) Leaves" Brazilian Archives of Biology and Technology 53 (2010) 1497-1502 describes a study wherein samples containing 50 g of yerba *maté* leaves were blanched at 100°C for 30 s in 1500 ml of NaOH solution. The leaves were washed immediately afterwards in cold water (5°C) in order to halt the heat treatment and to eliminate the surplus NaOH. Next, the leaves were submerged in a solution with magnesium or zinc ions at ambient temperature (approximately 25°C).

As yet, the most successful processes are those which add the divalent metal to the brine in the packaging of the blanched vegetable (US 5114725A or US 5482727), but it has not been possible to generalise their application to those other vegetal products whose chlorophyll pigment content is medium-to-low, as is the case with green fruits in general and table olives in particular. In these cases, the amount of Zn (II) to be absorbed by the product in order to obtain an optimal green colour usually surpasses amply 75-100 ppm (75-100% of the NRV).

It is therefore of great interest to the food industry in general, and to the table olive sector in particular, to optimise a process to obtain a foodstuff with a permanent green colour, minimising the divalent metal content, in particular that of Zn²⁺, in the final product. In the present invention, all the aforementioned difficulties are overcome, increasing to the maximum the process of complexing with the divalent metal, and therefore the re-greening of the vegetal product.

### EXPLANATION OF THE INVENTION

The object of the present invention is a process for the optimisation of the oreganoleptic properties of vegetal products containing chlorophyll pigments and which comprises the following stages:
- a pheophytinisation treatment of the vegetal products for the replacement of the Mg by 2H in at least 10% of the chlorophyll compounds
- treatment of the vegetal products with a solution having a pH of between 5 and 12, to maintain the pH of the vegetal products at a value above 5, and
- treatment of the vegetal products with at least one divalent metal compound selected from among Ca, Fe, Mn and Zn or combinations thereof, for the formation of chlorophyll - divalent metal complexes.

In particular, the organoleptic property to be optimised is the green colour, and the vegetal products are selected from among fruits and/or vegetables containing chlorophyll pigments such as table olives, peas, artichokes, chard, capers, cabbage, spinach, garlic sprouts, cardoons, turnip tops, broad beans, runner beans, green asparagus, green peppers, broccoli, gherkins, avocados, plums, kiwis, apples, pears and grapes.

The vegetal products to which the process is applied may be:
- unprepared, to be selected from among whole and fresh, whole and peeled, sliced, chopped or frozen.
- prepared and dried, prepared in vinegar, oil, salt or brine, prepared as preserves by heat treatment, fruit and vegetable preserves and/or derivatives, or combinations thereof.

In the present invention, the fruit and vegetable preserves and derivatives include vegetable oils and drinks, purees, soups, sauces, salads, stews, jams, jellies, marmalades, butters or spreads.

In a preferred embodiment of the process, the pheophytinisation treatment is performed during a period of between 3 years and 5 minutes, and prior to the treatment with the solution which maintains the pH of the vegetal products at a value higher than 5, preferably at a pH of between 5 and 8.
There exist a number of alternatives with regard to the order of the stages comprising the process of the invention.
- performing the treatment of the vegetal products with the solution which maintains the pH of the vegetal products at a value higher than 5 prior to the treatment of the vegetal products with at least one divalent metal compound.
- performing the treatment of the vegetal products with the solution which maintains the pH of the vegetal products at a value higher than 5 simultaneously with the treatment of the vegetal products with at least one divalent metal compound.
- performing the treatment of the vegetal products with the solution which maintains the pH of the vegetal products at a value higher than 5 subsequent to the treatment of the vegetal products with at least one divalent metal compound.
- the simultaneous performance of the pheophytinisation treatment and the treatment of the vegetal products with at least one divalent metal compound.
- the simultaneous performance of the treatment of the vegetal products with the solution which maintains the pH of the vegetal products at a value higher than 5, the pheophytinisation treatment and the treatment of the vegetal products with at least one divalent metal compound.
- the simultaneous stage of pheophytinisation and the treatment of the vegetal products with at least one divalent metal compound, followed by the treatment of the vegetal products with the solution which maintains the pH of the vegetal products at a value higher than 5.

With regard to the pheophytinisation treatment, there also exist a number of possible alternatives:
- heat treatment, preferably at a temperature of between 50 and 100°C, and during a period of time of between 1 and 90 minutes. This may be performed in a medium selected from among water or an aqueous solution with or without a food-grade acid, or by means of steam, dry heat, microwave, infra-red, radiofrequency or dielectric heating. More preferably, the heat treatment is performed with the vegetal products maintained at a pH below 6.
- a biochemical process, preferably a fermentation by lactic-acid bacteria, performed while maintaining the vegetal product under anaerobic conditions, during a period of time of over 4 days, or at least until a pH value below 5 is achieved. The preservation of the vegetal product may be performed by means of the addition of salt at a concentration of at least 2.5% with regard to the weight of the vegetal product, or by means of the addition of a brine at a concentration of at least 0.25 g per litre, with or without the addition of food-grade acids or other food additives.
- chemical treatment, wherein this treatment does not comprise the use of a buffered acid solution; preferably with an acid solution (pH<7) selected from among the following acids: acetic, ascorbic, benzoic, citric, hydrochloric, lactic, malic, propionic or succinic, and their salts, or combinations of the same. The chemical treatment consists of placing the vegetal products in contact with the solution at a concentration equal to or greater than 0.1 mM, at a product:liquid ratio which, at least, enables the covering of the vegetal material, or by a continuous flow of the solution, during a period of time of between 1 min. and 2 years, at a temperature between 4°C and 100°C.

With regard to the divalent metal compound, in a preferred embodiment a zinc compound is used, in particular a zinc salt selected from among zinc acetate, zinc bisglycinate, zinc chloride, zinc citrate, zinc stearate, zinc gluconate, zinc lactate, zinc oxide, zinc carbonate, zinc sulphate, or combinations thereof.

The treatment with the zinc salt consists of placing the vegetal products in contact with a solution of the zinc salt at a concentration of between 0.005 and 3 g/L, at a product:liquid ratio which, at least, enables the covering of the vegetal material, or by a continuous flow of the solution, during a period of time of between 5 min. and 1 year, at a temperature between 4°C and 150°C.

With regard to the solution with a pH of between 5 and 12, which maintains the pH of the vegetal products at a value higher than 5, the solution is selected from among sodium, potassium, ammonium, magnesium hydroxide or carbonate, or combinations thereof, or a boric-borate, glycine-glycinate, phosphoric-phosphate, carbonic-carbonate buffered solution, or combinations thereof. The treatment with the solution with a pH of between 5 and 12, which maintains the pH of the vegetal products at a value higher than 5, consists of placing the vegetal products, at least once, in contact with the solution at a concentration equal to or greater than 0.1 mM, at a product:liquid ratio which, at least, enables the covering of the vegetal material, or by a continuous flow of the solution, during a period of time of between 5 min. and 1 year, at a temperature between 4°C and 150°C.

The process of the invention may further include at least one of the following stages:
- washing the vegetal products
- drying
- slicing or shredding the vegetal products
- extraction of the oil or juice
- packaging in brine, in an inert atmosphere or vacuum-packing
- the addition of aromas and/or other ingredients or food additives
- heat treatment by sterilisation or pasteurisation

Another aspect of the present invention consists of the vegetal products obtained by means of a process as defined above, characterised in that they present a percentage of divalent metal - chlorophyll complexes, with regard to the total amount of chlorophyll compounds, of between 15% and 100%, the divalent metal being selected from among Ca, Fe, Mn and Zn, or combinations thereof.

In a preferred embodiment, the divalent metal - chlorophyll complexes are Zn - chlorophyll complexes present in a percentage of between 15% and 100%, and the vegetal products present a Zn content of between 0.3% and 0.0005%. More preferably, the Zn content in the packaged product is between 0.01% and 0.002%.

The vegetal products obtained may be whole, whole and peeled, sliced, shredded or frozen, prepared and dried, prepared in vinegar, oil, salt or brine, prepared as preserves by means of heat treatment, fruit and vegetable preserves, or combinations thereof. In the present invention, the fruit and vegetable preserves and derivatives include vegetable oils and drinks, purees, soups, sauces, salads, stews, jams, jellies, marmalades, butters or spreads.
In a preferred embodiment, the vegetal products employed in the process are green beans. In another preferred embodiment, the vegetal products employed in the application of the process are selected from between green table olives processed by alkaline treatment with or without lactic acid fermentation and green table olives processed *au naturel,* with or without lactic acid fermentation.

### DESCRIPTION OF THE DRAWINGS

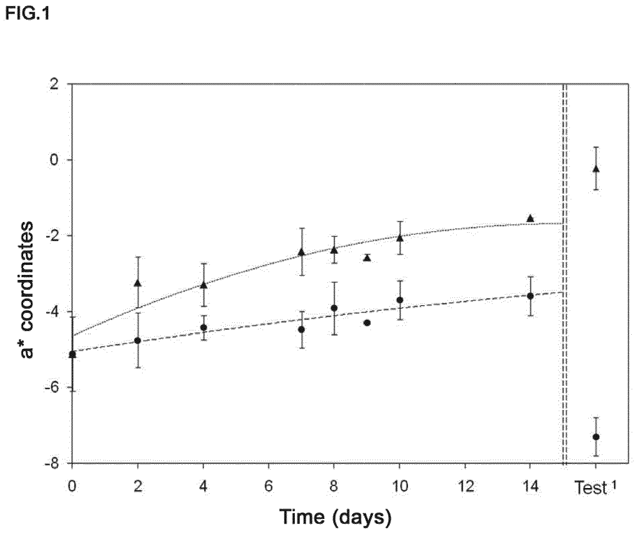

**Figure 1****:** Effect of the treatment with zinc acetate at a pH of 5.5 on the greenness of the table olive, estimated from parameter a*. The Zn²⁺ ions are added at a concentration of 3 g/L (3000 ppm) in an acetic/acetate buffer solution at 0.1M, at a pH of 5.5 and containing 6% of NaCl (w/v). ● with Zn²⁺ ▲ control without Zn²⁺. Note: *Accelerated storage test,* consisting of subjecting the treated olives to a temperature of 55°C during 24 hours.

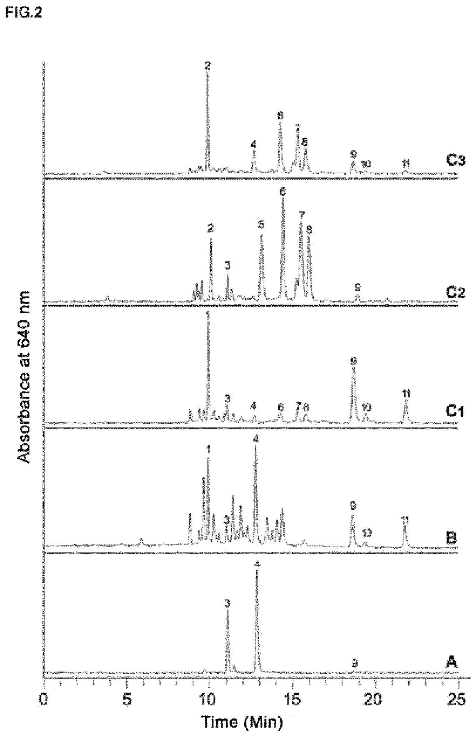

**Figure 2****:** Typical reverse-phase HPLC chromatograms with detection at 640 nm, for the separation of chlorophylls, Mg-free chlorophyll derivatives and Zn metallochlorophyll complexes in green table olives of the Manzanilla variety, according to the different stages of the Castelvetrano-style preparation process (CSP) and the performance of the invention in accordance with example no. 1: **(A)** Fresh fruit; **(B)** CSP fruit, **(C)** CSP fruit treated subsequently with 3 g/L (3000 ppm) of Zn²⁺ ions dissolved in NaCl brine at 4% (w/v), buffered at a pH of 5.5 with 0.1M of acetic acid/acetate: (**C₁**) for 14 days, (**C₂**) for 6 months, (**C₃**) for 10 days + accelerated storage test (24h at 55°C). Identification of peaks: **Chlorophylls: 3.** Chlorophyll *b*; **4.** Chlorophyll a; **Precursors of zinc metallochlorophyll complexes of the series a: 1.** 15² methyl-phytol-chlorine e₆ ester; **9**. Pheophytin *a*; **10**. Pheophytin *a'*; **11.** Pyropheophytin a. **Zinc metallochlorophyll complexes of the series *a*: 2.** Zn-15² methyl-phytol-chlorine e₆ ester; **5.** Zn-15¹-OH-Lactone Pheophytin *a*; **6.** Zn-Pheophytin *a*; **7**. Zn-Pheophytin *a'*; **8**. Zn-Pyropheophytin *a*.

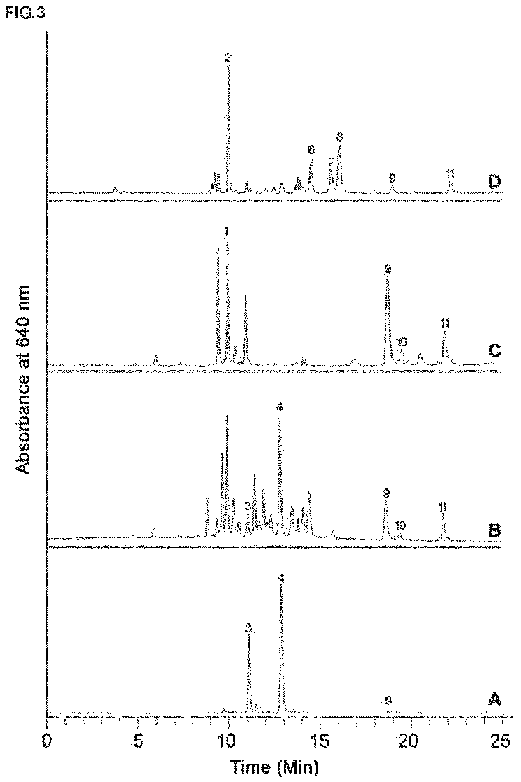

**Figure 3****:** Typical reverse-phase HPLC chromatograms with detection at 640 nm, for the separation of chlorophylls, Mg-free chlorophyll derivatives and Zn metallochlorophyll complexes in green table olives of the Manzanilla variety, according to the different stages of the Castelvetrano-style preparation process (CSP) and the performance of the invention: **(A)** Fresh fruit; **(B)** CSP fruit, **(C)** CSP fruit treated subsequent to 9 days' acid treatment in NaCl brine at 4% (w/v), buffered at a pH of 4 with 0.1M of lactic acid/NaOH (CSP+Ac) in accordance with examples 2, 3 and 4; **(D)** CSP+Ac fruit sterilised at 117°C for 43 min. in a 4% NaCl solution (w/v) with 0.1M glycine/NaOH at a pH of 9.5, containing 0.1 g/L (100 ppm) of Zn²⁺ ions, in accordance with example 4.2.

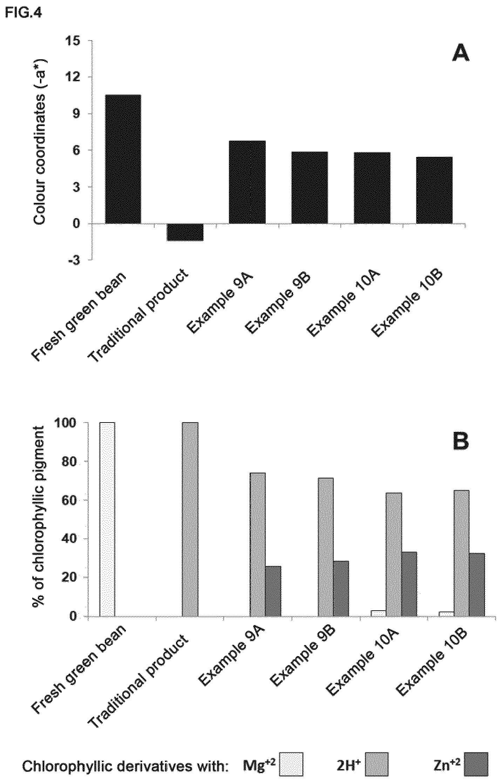

**Figure 4****:** Effect of the application of the invention to fresh green beans on **(A)** the greenness of the product, estimated as from parameter a*, and **(B)** the percentage of chlorophyll derivatives with Mg, 2H and with Zn, in accordance with the embodiments in examples 9 and 10. (A and B)

### DETAILED DESCRIPTION OF THE INVENTION

The present invention relates to processes for the improvement of the green colour in prepared fruits and vegetables, particularly in green beans and table olives, employing a divalent metal salt. Preferably, food-grade zinc is employed; the quantity of Zn (II) added to the product does not necessarily have to exceed 100% of the NRV per 100 g of product. The process may be applied to any product containing chlorophyll pigments (chlorophylls and/or chlorophyll derivatives).

The invention encompasses any stage of the preparation of the fruits and vegetables when in said preparation divalent metal salts, preferably zinc, are employed for the improvement of the colour, and the purpose thereof is to provide an improvement in the colour of the product by means of the formation of metallochlorophyll complexes of a divalent metal, preferably zinc (Zn-Cls) of a highly stable bright green colour. The process may comprise the following stages:
A) pheophytinisation treatment
B) treatment with at least one salt of a divalent metal, preferably zinc
C) treatment with a solution with a pH of between 5 and 12, to maintain the pH of the vegetal products at a value above 5
D) washing and drying
E) packaging
F) heat preservation treatment

Stages of cutting or shredding the vegetal products may also be included; likewise the extraction of oil or juice and the addition of aromas and/or other ingredients and food additives.

The process enables the increase to the maximum of the efficacy of the complexing process with the divalent metal, and therefore the re-greening of the vegetal product, in a process comprising two fundamental technical characteristics not performed to date: (a) bringing about the replacement of Mg by 2H in a significant part of the chlorophyll compounds (pheophytinisation) as an essential prior step for the subsequent reaction of complexing with the divalent metal, and (b) controlling the pH of the complexing reaction at a value greater than 5.

With these technical characteristics, the process achieves: (a) an optimal green colour in vegetal products such as tinned beans, employing a lower quantity of zinc, without it being necessary to exceed 100% of the NRV (100 ppm); (b) the avoidance of copper to achieve an optimal colour; (c) stabilisation of the green colour, even in vegetal products with a low chlorophyll pigment content, such as olives; (d) reducing the number and/or intensity of the heat treatments, reducing to the maximum the issues regarding texture and cooked taste; and (e) in one specific application, stabilising the green colour of the vegetal product prior to the heat preservation process, enabling its preservation by pasteurisation under acidic conditions, or even preservation without heat treatment due to the chemical characteristics of the product.

The performance of these stages may follow different sequences, as indicated above, it being possible to perform several of the stages simultaneously.

The re-greening of the product is attributed to the formation of divalent metal metallochlorophyll complexes. When zinc is used, the complexes formed are principally Zn-pheophytin a, Zn-pyropheophytin a and Zn-15²-Me-phytol-chlorine e₆ ester.

In the present invention, the term **"chlorophyll pigment"** refers to a coloured compound with a chemical structure derived from chlorophyll; that is, formed by a substituted porphyrin ring, with an additional isocyclic ring, which may be open, and a trace of esterified or otherwise propionic acid with a terpenic chain known as phytol. The porphyrin ring is a tetrapyrrole, with four pyrrole rings linked to form a larger ring, which is the porphyrin. In the case of chlorophyll, a Mg²⁺ atom linked to the nitrogens of the pyrrole groups is to be found in the centre of the porphyrin, but this Mg²⁺ atom may be replaced by a divalent metal or by 2H⁺ to form other chemically stable pigments.

The term **"green table olive"** refers to a product prepared from healthy fruits of farmed olive varieties, harvested during their ripening cycle, prior to colouring, when they have reached their normal size, and subjected to treatments to eliminate their natural bitterness and preserved by natural fermentation or heat treatment, with or without preservatives, and packaged with covering liquid. Examples of green table olives are green olives treated in brine, untreated green olives *au naturel,* or olive specialities processed by means of alkaline treatment and unfermented, which have specific names and characteristics in the different producer countries: *Campo Real* in Spain, *Castelvetrano* in Italy, *Picholine* in France, and *Californian-style* green olives or *greenripe olives* in the United States.

In the present invention, the term **"pheophytinisation treatment" (stage A)** refers to any physical (e.g. heat), chemical or biotechnological process causing the replacement of Mg by 2H in at least 10% of the chlorophyll compounds of the vegetal matter. The pheophytinisation treatment is selected from among a physical heating process, a chemical process under acidic conditions, a biotechnological acid fermentation process, or combinations thereof.

The physical heat treatment is a blanching/boiling of the vegetal product during a certain period of time. In a preferred embodiment, the treatment would be a heating of the vegetal products at a temperature of between 50 and 100°C during a period of time of between 1 and 90 min. In a more preferred embodiment, the treatment would be performed at 97°C during 20 min.
The chemical process under acidic conditions involves placing the vegetal material in contact with a solution with a pH lower than 7 during a certain period of time, at a product:liquid ratio which, at least, enables the covering of the vegetal material, or by a continuous flow of the solution. In accordance with a preferred embodiment, the solution is hydrochloric acid at a pH of 1.8 and with a concentration equal to or greater than 0.1 mM. The treatment time is between 1 min. and 2 years, preferably 9 days, at a temperature between 4°C and 100°C, preferably an ambient temperature of 25 ± 3°C. In another preferred embodiment, the treatment time is 20 min. and the temperature is 97°C.

The biotechnological fermentation process is the preservation of the vegetal material during a period of time by means of lactic acid fermentation. In accordance with a preferred embodiment, the natural fermentation takes place in NaCl brine at an equilibrium concentration of 7%, during a period of time exceeding 3 months, until a lactic acidity of at least 1.5% and a pH value below 5 is reached.

In the present invention, the term **"treatment with a divalent metal salt, preferably zinc"** (**stage B**) refers to placing the vegetal material in contact with a solution containing a divalent metal compound, preferably a zinc salt, during a certain period of time, at a product:liquid ratio which, at least, enables the covering of the vegetal material, or by a continuous flow of the solution. The divalent metal salt is a food-grade salt, preferably the food additive zinc acetate (E-650) or zinc chloride, at a concentration between 0.005 g/L (5 ppm) and 3 g/L (3000 ppm), preferably that which enables the obtaining of a product providing 100% of the NRV of zinc per 100 g of product. The treatment time is between 5 min. and 1 year, and the temperature between 4°C and 150°C. In a preferred embodiment with olives, the treatment is performed for 48 hours at 25 ± 3°C. In other preferred embodiments with vegetables, the treatment is performed for 5 days at 60°C and for 45 min. at 97°C.

In the present invention, the term **"treatment with** a **solution with a pH of between 5 and 12"** (**stage C)** refers to placing the vegetal material in contact with a solution with a pH of between 5 and 12 during a certain period of time, to maintain the pH of the vegetal products at a value above 5, at a product:liquid ratio which, at least, enables the covering of the vegetal material, or by a continuous flow of the solution. In accordance with a preferred embodiment, the solution is sodium hydroxide, at a concentration ≥ 0.1M and a pH of 13. The treatment time is between 5 min. and 1 year, and the temperature between 4°C and 150°C. In a preferred embodiment with olives, the treatment is performed during 48h at 25 ± 3°C followed by 43 min. at 117°C. In other preferred embodiments with vegetables, the treatment is performed for 5 days at 60°C and for 45 min. at 97°C.

In the present invention, the term **"washes"** (**stage D)** refers to successive treatments of the vegetal material with water during a period of time. In a preferred embodiment, this treatment is performed by immersion of the fruit in water during a period of time of between 3 and 24 hours, preferably 12h, and the number of washes is between 0 and 5, in accordance with the acidity and/or the concentration of divalent metal, preferably zinc, employed in a previous stage. In a preferred embodiment, 5 washes are performed, of 12 hours each.

In the present invention, the term **"packaging"** (**stage E)** refers to the process by which the vegetal product is packed in a container for its transport and sale, in brine, in a controlled atmosphere or vacuum-packed. In a preferred embodiment, the packaging is performed by immersing the vegetal product in NaCl brine at a concentration between 0.12 and 6% (w/v), preferably 4%. If in one of the preferred embodiments the concentration of the divalent metal salt in stage **B** is ≤ 100% of the NRV, the washing stage (**stage D)** and the addition of brine in the packaging (**stage E)** may be eliminated.

In the present invention, the term "heat **preservation treatment"** (**stage F)** refers to a heat treatment that guarantees the long-term safety of the product. In a preferred embodiment, the heat treatment is a commercial sterilisation at a temperature between 117°C and 150°C, preferably at 117°C, during a period of 43 min. In another preferred embodiment, the heat treatment is a pasteurisation, at a temperature between 60 and 95°C. In more preferred embodiments, the pasteurisation is performed at 80°C during 8 min. or at 90°C during 15 min.
For the analysis of chlorophyll pigments in general, their extraction is performed with acetone saturated with MgCO₃. Starting from a weighed sample of shredded material, successive extractions are performed until colourless extracts are obtained, and next, a transfer of components to diethyl ether is carried out, in accordance with the methodology described by Mínguez-Mosquera, Gandul-Rojas, Gallardo-Guerrero and Jarén-Galán, "Chlorophylls". In Methods of Analysis for Functional Foods and Nutraceuticals; Hurst, W. J., Ed.; CRC Press: Boca Raton, FL, 2002; pp 159-218. The ether phase is filtered through an anhydrous Na₂SO₄ bed to completely remove the water, and it is evaporated to dryness in a rotary evaporator. The dry residue is stored at -20°C in an atmosphere of nitrogen until used.

For the analysis of chlorophyll pigments in olives, and given their high lipid content, a specific extraction technique is required; this has been developed by Mínguez-Mosquera and Garrido-Fernández "Chlorophyll and carotenoid presence in olive fruit, Olea europea". J. Agric. Food Chem. (1989) 37, 1-7). The technique is based on an extraction with N,N-Dimethylformamide (DMF), followed by a selective distribution of components between this DMF phase and hexane. The lipids and the diesterified xanthophylls and carotene fraction remain in the hexane phase, while the DMF phase retains the chlorophyll compounds and the free and monoesterified xanthophylls. This system yields a solution of pigments free of the fatty matter which is characteristic of these fruits and which interferes in the subsequent separation and identification of the pigments.

Once the pigment extract has been obtained, the separation and quantification of pigments is carried out by means of HPLC with a reverse phase column (20 × 0.46 cm) packed with Mediterránea-Sea C18 (3 µm) (Teknokroma, Barcelona, Spain). The column is protected with a pre-column (1 x 0.4 cm) packed with the same material. The separation is performed at a flow rate of 1.25 mL/min., by means of a gradient elution employing two blends of solvents: A. Water/ion-suppressing reagent/methanol (1:1:8 v/v/v) and B.- methanol / acetone (1:1 v/v). The ion-suppressing reagent is tetrabutylammonium acetate 0.05 M and ammonium acetate 1M in water (Mínguez-Mosquera, Gandul-Rojas, Montaño-Asquerino and Garrido-Fernández "Determination of chlorophylls and carotenoids by HPLC during olive lactic fermentation". J. Chromatogr. (1991) 585, 259-266). The gradient system employed is an adaptation of that described by Gandul-Rojas, Roca and Gallardo-Guerrero "Detection of the colour adulteration of green table olive with copper chlorophyllin complexes (E-141ii colorant)". LWT - Food Sci. Tech. (2012) 463, 11-318.
The spectrophotometric detection of the chlorophyll pigments is performed at 666, 650, 640 and 626 nm, and an on-line record of the UV-Vis absorption spectrum is obtained with a photodiode detector. The identification is performed by means of co-chromatography with the corresponding standards and from the spectral characteristics described in detail in specific publications (Mínguez-Mosquera, Gandul-Rojas, Gallardo-Guerrero and Jarén-Galán "Chlorophylls". In Methods of Analysis for Functional Foods and Nutraceuticals; Hurst, W. J., Ed.; CRC Press: Boca Raton, FL, 2002; pp 159-218). The quantification is performed by means of the corresponding calibration curve (quantity vs integrated peak area). The calibration equations are obtained by linear regression analysis of least squares in a range of concentration in accordance with the levels of concentration of these pigments in table olives. Duplicate analyses of 5 different volumes of each standard solution are performed.

To determine the metal content, one commences with 100 g of fruit which are washed, dried, pitted and shredded. From the resulting paste, exactly 5 g is weighed into a porcelain capsule and is placed in a muffle furnace. The temperature of the muffle is raised rapidly to 100°C and then is raised slowly until it reaches the calcination temperature (550°C), at which it is maintained for 8-10 hours. The ashes, of a greyish-white colour, are moistened slightly and dissolved in three 2-mL portions of HCL 6 N and gradually filtered through filter paper into a 25-mL calibrated flask. Subsequently, the filter is washed three times with 3 mL of deionised water, which is also added to the calibrated flask; this is finally made up to volume with deionised water. The dissolving of the ashes is facilitated by heating the capsule slightly after each addition of HCI. In parallel, a blank is prepared which only contains the reagents. Finally, the metal content is determined with an atomic absorption spectrophotometer (GBC, model 932) equipped with two multi-element cathode lamps (Cu, Fe, and Mn) (GBC, Victoria, Australia) and (Ca, Mg, Cu and Zn) (Photometry, Victoria, Australia). The sample is nebulised in an air-acetylene flame and the instrumental conditions for the measurement of the absorbance are established in accordance with the equipment manual (López-López, García-García and Garrido-Fernández "Multivariate characterization of table olives according to their mineral nutrient composition". Food Chem. (2008) 106:369-378).

The measurement of the colour is obtained with a BYK-Gardner, Model 9000 spectrophotometer equipped with a software to calculate the chromatic coordinates in the CIELAB scale. The datum for each measurement will be the average value obtained with 20 samples of shredded olives or beans (Arroyo-López, Romero, Durán-Quintana, López-López, García-García and Garrido-Fernández "Kinetic study of the physicochemical and microbiological changes in seasoned olives during the shelf-life period". J. Agric. Food Chem. (2005) 53, 5285-5292). The changes in the green colour are expressed with the L*, a*, b* parameters, the -a*/b ratio, angle of hue (h) and chroma (C*) (Koca, Karadeniz, Burdurlu "Effect of pH on chlorophyll degradation and colour loss in blanched green peas". Food Chem. (2006) 100, 609-615).

### EMBODIMENT OF THE INVENTION

The invention will be illustrated below by means of a number of assays performed, which highlight the efficacy of the process described in the present invention.

**Raw material for examples 1 to 5.** A 78-kilo batch of olive fruits of the Manzanilla variety, collected mostly in the yellowish-green state of ripeness, was processed on a laboratory scale as green table olives treated with alkali and not fermented, in accordance with the *"Castelvetrano style".* Before processing, a manual selection of the fruit was performed, eliminating those damaged or in different states of ripeness (mottled, purple or black). These selected fruits were placed in PET containers with a capacity of 3.7 L and were covered with a solution of NaOH at 2% (w/v) (2.2 kg of fruit + 1.8 L of alkaline solution). After an hour of treatment, 100 g of NaCl was added to each container (equivalent to a final concentration of 5.5% in the NaCl/NaOH solution) and the fruits were maintained in this alkaline brine for 15 days, subsequently performing three washes with water, these lasting 3.5h, 18h and 3.5h. Finally, the fruits were placed in NaCl brine at 6% (w/v) and were kept in a refrigeration unit at 4°C until use.

### EXAMPLE No. 1: PASTEURISED PRODUCT PREPARED IN THREE PHASES

In this example, the pheophytinisation treatment was performed by means of a chemical process under acid conditions and was performed simultaneously with the treatment of the vegetal products with the solution which maintains the pH of the vegetal products at a value above 5, and with the treatment of the vegetal products with at least one divalent metal compound.

**Phase 1. Stages A, B and C: pheophytinisation treatment and treatment with zinc salt in a buffered acid solution.** Treatment of green table olives prepared in the Castelvetrano style in a 0.1 M solution of the acetic/acetate buffer mixture at a pH of 5.5, containing 6% (w/v) of NaCl and 3 g/L (3000 ppm) of Zn²⁺ ions as zinc acetate. The solid/liquid ratio is 1:3, and the treatment is 6 months at an ambient temperature of 25 ± 3°C.
Glass jars with a capacity of 445 mL (16 Ref TO77) were filled with 20 olives (99-103 g) and 300 mL of the buffered brine containing 3 g/L (3000 ppm) of zinc acetate. The closed jars were kept in the laboratory at ambient temperature and in darkness, and were analysed with regard to colour and chlorophyll pigment content after 2, 4, 7, 8, 9, 10 and 14 days. Finally, the fruits were kept in store for 6 months, and alternatively were subjected to an accelerated storage test by heating in an oven at 55°C during 24h. In parallel, checks were performed on fruits packaged and stored under identical conditions, but without the addition of Zn²⁺ to the packaging brine.
During storage, the loss of the green colour in the fruits, measured from the chromatic coordinate a*, was very slow in the fruits packaged with zinc, in no case being significant (p<0.05) **(****figure 1****).** Conversely, the fruits not treated with zinc underwent a much more rapid loss of greenness, starting to become significant as from day 9 (p<0.05). This loss of greenness was associated with the reaction of the replacement of the Mg²⁺ by 2H⁺ undergone by the chlorophylls and derivatives under acid conditions. Conversely, in the fruits treated with the Zn²⁺ salt, this reaction was counteracted by the insertion of this divalent metal into the porphyrin ring, bringing about the formation of metallochlorophyll complexes of a stable green colour. At day 8, the formation of these zinc metallochlorophyll complexes began to be apparent in the "a" series, slowly increasing their concentration until day 14 **(****figure 2** **C₁).** By means of the accelerated storage test it was possible to bring about a highly significant re-greening of the fruit treated with zinc, the value of a* even surpassing the initial value (-7.30) **(table 1).** This improvement in colour was associated with the formation of different zinc metallochlorophyll complexes, mainly of the "a" series (**figure 2** **C₃**). Quantitatively, the zinc metallochlorophyll complexes represent almost 45% of the total of chlorophyll pigments present in the olives subjected to the accelerated storage test **(table 2**).

**TABLE 1. Chromatic coordinate a* in green table olives processed in accordance with different examples of the invention.**

| **Sample** | **Stages of the invention**¹) | | | | | | | **a*** |
|---|---|---|---|---|---|---|---|---|
| **FGO²⁾** | | | | | | | | -12.52±0.01 |
| **CSPGO (i)** | | | | | | | | -5.87±0.51 |
| **CSPGO (a)** | | | | | | | | -2.68±0.42 |

| | A | **B** | **C** | | **D** | **E** | **F** | |
|---|---|---|---|---|---|---|---|---|
| **Ex. 1³⁾** | BAS pH 5.5 with 3000 ppm of Zn (1:3) | | | | 5 | YES | P | -7.30±0.51 |
| | BAS pH 5.5 (control without Zn) (1:3) | | | | 5 | YES | P | -0.22±0.57 |
| **Ex. 2** | BAS pH 4 (1:3) | BBS pH 9.5 + 3000 ppm of Zn (1:3) | | | 5 | YES | P | -1.53±0.25 |
| **Ex. 3** | BAS pH 4 (1:3) | BBS pH 9.5 (1:1) + 80 ppm of Zn | | | NO | YES | P | |
| 3.1 | | | | | | | | 0.25±0.32 |
| 3.2 | | 100 ppm of Zn | | | | | | 0.30±0.27 |
| 3.3 | | 120 ppm of Zn | | | | | | -0.35±0.41 |
| 3.4 | | 140 ppm of Zn | | | | | | -0.33±0.28 |
| 3.5 | | Control without Zn | | | | | | 3.93±0.13 |
| **Ex. 4** | BAS pH 4 (1:3) | BBS pH 9.5 (1:1) + 80 ppm of Zn | | | NO | NO | S | |
| 4.1 | | | | | | | | -4.28±0.39 |
| 4.2 | | 100 ppm of Zn | | | | | | -4.61±0.58 |
| 4.3 | | 120 ppm of Zn | | | | | | -4.71±0.71 |
| 4.4 | | 140 ppm of Zn | | | | | | -5.00±0.39 |
| **Ex. 5** | BAS pH 4 + 100 ppm of Zn (1:1) | | (1:1) | | NO | NO | S | |
| 5.1 | | | BBS pH 9.5 | | | | | -3.26±1.53 |
| 5.2 | | | BBS pH 9 | | | | | -2.54±1.51 |
| **Ex. 6** | AS pH<2 (4:3) | BBS pH 9.5 + 200 ppm of Zn (4:3) | | | NO | NO | S | -4.23±0.33 |
| **Ex. 7⁴⁾** | AS pH<2 (4:3) | 100 ppm of Zn | | BS pH >13 (4:3) | NO | YES | S | -4_{.}47±0.55 |
| **Ex. 8** | LAF pH<4 | BBS pH 9.5 + 200 ppm of Zn (4:3) | | | NO | NO | S | -3.96±0.11 |

**TABLE 2. Percentage of chlorophyll pigments with Mg, with 2H and with Zn, and zinc content in green table olives processed in accordance with different examples of the invention, as described in table 1:**

| **Sample** | **Chlorophyll pigment** (%) | | | **Zinc content (ppm)** |
|---|---|---|---|---|
| | **with Mg** | **with 2H⁺** | **with Zn²⁺** | |
| **FGO**²⁾ | 97.6±2.1 | 2.4±0.8 | - | 3.10±0.25 |
| **CSPGO (i)** | 50.1±4.4 | 49.9±4.4 | - | Nd |
| **CSPGO (a)** | 29.7±15.5 | 70.3±15.5 | - | Nd |
| | | | | |
| **Ex. 1³⁾** | 20.5±1.1 | 34.6±0.1 | 44.9±1.2 | Nd |
| | 18.5±0.5 | 81.5±0.5 | - | Nd |
| **Ex. 2** | 0.4±0.3 | 22.0±2.0 | 74.4±1.4 | 503.2±34.2 |
| **Ex. 3** | Nd | Nd | Nd | Nd |
| 3.1 | | | | |
| 3.2 | | | | |
| 3.3 | | | | |
| 3.4 | | | | |
| 3.5 | | | | |
| **Ex. 4** | | | | |
| 4.1 | 4.7±0.1 | 45.3±3.6 | 48.9±4.6 | 58.8±6.9 |
| 4.2 | 5.3±1.7 | 51.8±0.3 | 42.9±2.0 | 68.5±3.2 |
| 4.3 | 5.3±0.4 | 44.4±0.9 | 50.3±0.5 | 86.2±5.1 |
| 4.4 | 3.1±0.1 | 50.3±1.1 | 54.6±1.2 | 70.4±5.6 |
| **Ex. 5** | | | | |
| 5.1 | 20.1±1.2 | 55.7±2.6 | 23.3±0.9 | 34.9±1.1 |
| 5.2 | 20.4±1.4 | 63.1±2.4 | 15.3±1.0 | 37.8±5.9 |
| **Ex. 6** | 12.2±0.1 | 38.3±1.1 | 49.5±1.2 | 46.0±2.5 |
| **Ex. 7** | 0.4± 0.0 | 72.0± 0.3 | 26.7± 0.3 | 62.5±3.6 |
| **Ex. 8** | 9.2±1.5 | 50.0±6.7 | 40.8±8.3 | 56.0±5.0 |

Wherein (for tables 1 and 2): 1) Stages of the invention. A: pheophytinisation treatment; B: treatment with zinc salt; C: treatment with a solution at pH>5; D: washes; E: packaging in brine; F: heat preservation treatment. 2) Abbreviations. FGO: fresh green olive; CSPGO: green table olive prepared in the "Castelvetrano" style; (i) initial; (a) stored for 6 months at 4°C; Nd: not determined; BAS: Buffered acid solution 0.1 M Lactic acid-NaOH; AS: Unbuffered acid solution, 0.1 M HCl; BBS: Buffered base solution, 0.1 M glycine-NaOH: BS: Unbuffered base solution, 0.175 M NaOH; LAF: Lactic acid fermentation; P: Pasteurisation at 80°C for 8 minutes; S: Sterilisation at 117°C for 43 min. 3) The data of this example correspond to an accelerated storage test (24h at 55°C). 4) In this example, stage B, the treatment with zinc salt, is performed subsequent to neutralisation and at the same time as stage E, packaging in brine.

The results reveal that the conditions of storage tested may be useful for the maintenance of the desired green colour of the olives prepared *"Castelvetrano style",* and that this improvement in colour will be intensified as the time of storage under these conditions passes. After 6 months of real storage at ambient temperature, the product displays a significant improvement in colour and may be washed, packaged and pasteurised for sale.

**Phase 2. Stage D: washes.** Immersion of the olives in tap water for 60h, with a change of water every 12h (5 washes).

**Phase 3. Stages E and F: packaging in brine and heat preservation treatment.** Filling of 370 mL glass jars with approximately 156 g of fruits and approximately 180 mL of a buffered mix of 0.1 M lactic acid/lactate at pH 4 and containing 4% (w/v) of NaCl at a temperature of 70°C, and pasteurisation at 80°C for 8 min.

The zinc metallochlorophyll compounds formed, responsible for the improvement in the green colour, are stable and are maintained subsequent to the heat pasteurisation treatment. In the product that had remained under treatment for 6 months, the value of the a* coordinate indicated a stabilisation of the green colour (0.27) and furthermore presented a high percentage of zinc metallochlorophyll complexes (71.63%) (Figure 2 C₂). However, the prolonged duration of the treatment and the high concentration of zinc salt caused the development of brownish patches on the product, rendering it unacceptable.

### EXAMPLE No. 2: PASTEURISED PRODUCT PREPARED IN FOUR PHASES

In this example, the pheophytinisation treatment is performed by means of a chemical process under acid conditions and is performed prior to the treatment of the vegetal products with the solution that maintains the pH of the vegetal products above 5, and to the treatment of the vegetal products with at least one divalent metal compound.

**Phase 1. Stage A: pheophytinisation treatment with a buffered acid solution:** Treatment of green table olives prepared in the castelvetrano style in a buffer solution of lactic acid/NaOH at a concentration of 0.1 M and a pH of 4, containing NaCl at 4% (w/v) and a solid:liquid ratio of 1:3 during 9 days, at an ambient temperature of 25 ± 3°C.

**Phase 2. Stages B and C: treatment with zinc salt in a buffered base solution.** Immersion of the fruit in a buffer mix of 0.1 M glycine/NaOH at a pH of 9.5, containing NaCl at 4% (w/v) and the food additive zinc acetate, at a concentration of 3 g/L (3000 ppm) and a solid/liquid ratio of 1:3, during 6 days, at an ambient temperature of 25 ± 3°C.

**Phase 3. Stage D: washes.** Immersion of the olives in tap water for 60h, with a change of water every 12h (5 washes).

**Phase 4. Stages E and F: packaging in brine and heat preservation treatment.** Filling of 370 mL glass jars with approximately 156 g of fruits and approximately 180 mL of a buffered mix of 0.1 M acetic acid/acetate at pH 4.3 and containing 4% (w/v) of NaCl at a temperature of 70°C, and pasteurisation at 80°C for 8 min.
With this second example, a first optimisation of the conditions of treatment is performed. It has been revealed that the optimal pH for the formation of the metallochlorophyll complexes depends on the type of chlorophyll substrate. In the case of chlorophylls and derivatives containing Mg²⁺, the complexing reaction is more rapid at an acid pH, as these conditions favour the exchange of Mg²⁺ for 2H⁺ and the 2H⁺ for Zn²⁺. However, there exist bibliographic references that show that in heat-treated vegetables, wherein all the chlorophyll derivatives are of the pheophytin type (Mg²⁺-free), the formation of the complexes with Zn²⁺ is intensified at an alkaline pH. In this example, stages A and B are performed separately at different pH values, in order to reduce the time of treatment with the zinc salt. The fruit is subjected to a first acid treatment at a pH of 4 to trigger the pheophytinisation of the chlorophyll substrates **(****figure 3C****),** followed by a second treatment with buffered base brine at a pH of 9.5, in the presence of 3 g/L (3000 ppm) of Zn²⁺ ions. After only 6 days of treatment with the zinc salt, the formation of 74.37% of zinc complexes is achieved, and a resulting stabilisation of the green colour, measured from the a* parameter, with a value of -1.53 **(tables 1 and 2)** The fruits are subjected to 5 washes to reduce the zinc content, and are finally packaged in acid brine and pasteurised. The complexes formed are stable to heat treatment and the green colour remains stable, but the zinc content of the product was 0.5 g/kg (503.22 ppm), 500% of the NRV.

### EXAMPLE No. 3: PASTEURISED PRODUCT PREPARED IN THREE PHASES

In this example, the pheophytinisation treatment is performed by means of a chemical process under acid conditions and is performed prior to the treatment of the vegetal products with the solution that maintains the pH of the vegetal products above 5, and to the treatment of the vegetal products with at least one divalent metal compound Different concentrations of metal are assayed.

**Phase 1. Stage A: pheophytinisation treatment with a buffered acid solution.** Treatment of green table olives prepared in the castelvetrano style in a buffer solution of lactic/NaOH at a concentration of 0.1 M and a pH of 4, containing NaCl at 4% (w/v) and a solid/liquid ratio of 1:3 during 9 days, at an ambient temperature of 25 ± 3°C.

**Phase 2. Stages B and C: treatment with zinc salt in a buffered base solution.** Immersion of the fruit in a buffer mix of 0.1 M glycine/NaOH at a pH of 9.5, containing NaCl at 4% (w/v) and the food additive zinc acetate, at concentrations of 0.08 g/L; 0.1 g/L; 0.12 g/L; and 0.14 g/L (80, 100, 120, and 140 ppm) and a solid/liquid ratio of 1:1, during 48h at ambient temperature.
**Phase 3. Stages E and F: packaging in brine and heat preservation treatment.** Filling of 370 mL glass jars with approximately 156 g of fruits and approximately 180 mL of a buffered mix of 0.1 M lactic/NaOH at pH 4.3 and containing 6% (w/v) of NaCl at a temperature of 70°C, and pasteurisation at 80°C for 8 min.

In this third example, the quantity of zinc salt employed is reduced, which enables the elimination of the washing stage; however, a correct stabilisation of the green colour is not achieved, the values of a* remaining between 0.30 and -0.35, according to the quantity of zinc added **(table 1)**

### EXAMPLE No. 4: STERILISED PRODUCT PREPARED IN TWO PHASES

In this example, the pheophytinisation treatment is performed by means of a chemical process under acid conditions, and is carried out independently in a first phase. In a second phase, the treatment of the vegetal products with the solution that maintains the pH of the vegetal products above 5 and the treatment of the vegetal products with at least one divalent metal compound are performed simultaneously, and are thus synchronised with the heat preservation treatment.

**Phase 1. Stage A: pheophytinisation treatment with a buffered acid solution.** Treatment of green table olives prepared in the castelvetrano style in a buffer solution of lactic acid/NaOH at a concentration of 0.1 M and a pH of 4, containing NaCl at 6% (w/v) and a solid/liquid ratio of 1:3 during 9 days, at an ambient temperature of 25 ± 3°C.

**Phase 2. Stages B, C, E and F: packaging in brine at a buffered base pH, addition of zinc salt and heat sterilisation treatment.** Filling of 370 mL glass jars with approximately 156 g of fruits and approximately 180 mL of a buffered mix of 0.1 M of glycine/NaOH at pH 9.5 and containing 4% (w/v) of NaCl and the food additive zinc acetate at concentrations of 0.08 g/L; 0.1 g/L; 0.12 g/L; and 0.14 g/L (80, 100, 120, and 140 ppm) and at a solid/liquid ratio of 1:1, leaving an upper space of at least 2 mL. After 48h of equilibrium, a technical heat sterilisation treatment is performed for at least 15 D (43 min. at 117°C)
In this fourth example an additional optimisation is performed by combining stages B, C and E with a heat sterilisation treatment. In this way, the quantity of additive employed is reduced to ≤ 0.14 g/L (140 ppm), the washes are eliminated and the total time of preparation of the product is reduced. After the stage of treatment with acid buffer at a pH of 4 during 9 days, which causes a percentage of pheophytinisation in the chlorophyll substrates of at least 95% **(****figure 3C****),** the fruits are packaged in a buffer mix at a pH of 9.5, containing different quantities of zinc, and are subjected to 15 D heat sterilisation treatment. Immediately after the heat treatment, the formation of a high percentage of zinc complexes (>43%) is achieved, as is a stabilisation of the green colour (a* between -4.28 and -5.00) **(****Figure 3** **D and tables 1 and 2)** All the treatments achieve the desired improvement/stabilisation of the green colour and maintain a quantity of zinc in the finished product that is lower than 100% of the NRV **(table 2).** In the treatments with 0.08 g/L and 0.1 g/L (80 and 100 ppm) of zinc acetate, this quantity is lower than 75 ppm (75% of the NRV), the maximum quantity permitted in certain legislations (document US 5482727). The product would be ready for sale in 10 days, and unlike the products of this type of preparation of heat-treated olives currently available on the market, the colour may continue to evolve favourably during the storage of the product at ambient temperature.

### EXAMPLE No. 5: STERILISED PRODUCT PREPARED IN TWO PHASES

In this example, the pheophytinisation treatment is performed in a first phase by means of a chemical process under acid conditions, simultaneously with the treatment of the vegetal products with at least one divalent metal compound. In a second phase, the treatment of the vegetal products with the solution that maintains the pH of the vegetal products above 5 is carried out, simultaneously with the heat preservation treatment.

**Phase 1. Stages A and B: pheophytinisation treatment and treatment with zinc salt in a buffered acid solution.** Treatment of green table olives prepared in the castelvetrano style in a buffer solution of lactic acid/NaOH at a concentration of 0.1 M and a pH of 4, containing NaCl at 4% (w/v) and 0.1 g/L (100 ppm) of the food additive zinc acetate. The solid/liquid ratio is 1:1, and the treatment is 9 days at an ambient temperature of 25 ± 3°C.

**Phase 2. Stages C, E and F: packaging in brine at a buffered base pH and heat sterilisation treatment.**
Filling of 370-mL glass jars with approximately 156 g of fruits and approximately 180 mL of a buffered mix of 0.1 M of glycine/NaOH at pHs 9 and 9.5, containing 4% (w/v) of NaCl, at a solid/liquid ratio of 1:1, leaving an upper space of at least 2 mL. After 48h of equilibrium, a technical heat sterilisation treatment is performed for at least 15 D (43 min. at 117°C).

In this fifth example an additional optimisation is performed by combining stages A and B (treatment in buffered acid solution and treatment with zinc salt). In this way an even further reduction in the quantity of zinc added to the product is achieved, reaching < 40 ppm (**table 2**), forming a lower quantity of metallochlorophyll complexes than that of the previous example (between 15 and 23%), but sufficient to stabilise the green colour, with an a* value of between -2.54 and -3.26. In this case, due to adding the zinc at the acid treatment stage, the degree of pheophytinisation of the chlorophyll pigments was lower, maintaining subsequent to the heat treatment 20% of the native complexes with magnesium.

### EXAMPLE No. 6: STERILISED PRODUCT PREPARED IN THREE PHASES

In this example, the pheophytinisation treatment is performed in a first phase by means of a chemical process under acid conditions, and in a second phase the treatment of the vegetal products with at least one divalent metal compound is performed simultaneously with the treatment of the vegetal products with the solution that maintains the pH of the vegetal products at a value above 5.

**Raw material:** A 5-kg batch of olives of the *cacereña* variety was subjected to a treatment with a solution of NaOH at 1.7% (w/v) containing 3% (w/v) of NaCl. The fruit/liquid ratio was 4:3 and the duration of the treatment was 6.5 hours. Subsequently, they were washed in water for 4 hours at the same fruit/liquid proportion.

**Phase 1. Stage A: pheophytinisation treatment by a chemical process under acid conditions.** Treatment of the olives with a 0.1 M solution of HCI and 8% NaCl (w/v) at a fruit/liquid ratio of 4:3 during 4 days.

**Phase 2. Stages B and C: treatment with zinc salt in a buffered base solution:** Treatment of the olives with a buffered solution of glycine-NaOH 0.1 M at a pH of 9.5, containing 0.2 g/L (200 ppm) of Zn (II) and a fruit/liquid ratio of 4:3 during 48 hours.

**Phase 3. Stages E and F: packaging in brine and heat sterilisation treatment.** Filling of 370-mL glass jars with approximately 200 g of fruits and approximately 150 mL of NaCl brine at 4% (w/v) at a solid/liquid ratio of 4:3, leaving an upper space of at least 2 mL, and technical heat sterilisation treatment for at least 15D (43 min. at 117°C).

In this example stage A is optimised, replacing the buffered 0.1 M solution of lactic acid-NaOH at a pH of 4, employed in the previous examples, by an unbuffered 0.1 M acid solution of hydrochloric acid (pH=1.8). By subjecting the fruits to a much more intense acid treatment, the duration of this first stage is reduced from the 9 days required in the examples above to 4 days, and furthermore, the quantity of liquid necessary for the optimal performance of this stage is also reduced. On conclusion of these 4 days, the a* coordinate was established at 3.63±0.35 and the percentage of pheophytinisation reached 100% of the chlorophyll fraction of the fruit.

After the phase of adding the zinc salt at a base pH, once the olives were packaged, they displayed a significant improvement in their green colour after the heat treatment, materialised in a variation of the a* coordinate, which stood at -4.23±0.33, and a 50% formation of zinc metallochlorophyll complexes (**Tables 1 and 2**).

### EXAMPLE No. 7: STERILISED PRODUCT PREPARED IN THREE PHASES

In this example, the pheophytinisation treatment is performed in a first phase by means of a chemical process under acid conditions, and in a second phase the treatment of the vegetal products with the solution that maintains the pH of the vegetal products at a value above 5 is performed, and in a third phase the treatment of the vegetal products with at least one divalent metal compound is performed.

**Raw material:** A 5-kg batch of olives of the cacereña variety was subjected to a treatment with a solution of NaOH at 1.7% (w/v) containing 3% (w/v) of NaCl. The fruit/liquid ratio was 4:3 and the duration of the treatment was 6.5 hours. Subsequently, they were washed in water for 4 hours at the same fruit/liquid proportion.

**Phase 1. Stage A: pheophytinisation treatment by a chemical process under unbuffered acid conditions.** Treatment of the olives with a 0.1 M solution of HCI and 8% NaCl (w/v) at a fruit/liquid ratio of 4:3 during 4 days.

**Phase 2. Stage C: treatment in an unbuffered base solution to maintain the pH >** 5: Treatment of the olives with a 0.175 M solution of NaOH during 24h to reach a pH value > 5.

**Phase 3. Stages B, E and F: treatment with zinc salt, packaging in brine and heat sterilisation treatment.** Filling of 370-mL glass jars with approximately 200 g of fruits and approximately 150 mL of NaCl brine at 4% (w/v), containing 0.1 g/L (100 ppm) of Zn (II) at a fruit/liquid ratio of 4:3 during 24h, leaving an upper space of at least 2 mL, and technical heat sterilisation treatment for at least 15D (43 min. at 117°C).

In this example, stage A is performed as in the previous case, with an unbuffered acid solution, and stage C is optimised, replacing the buffered 0.1 M glycine-NaOH solution employed in the previous examples by an unbuffered base solution of 0.175 M of sodium hydroxide (pH= 13). By subjecting the fruits to a much more intense base treatment, the duration of this stage is reduced to 24h.

On conclusion of the 4 days of pheophytinisation (stage A), the a* coordinate stood at 4.28±0.22 and the percentage of chlorophyll derivatives with 2H⁺ reached 100% of the chlorophyll fraction of the fruit.

After the neutralisation phase with unbuffered base solution, the fruits are packaged in brine containing the zinc salt and are subjected to heat treatment. After the heat treatment, the fruits presented a significant improvement in their green colour, the a* coordinate reaching a value of -4.47±0.55 and a formation of zinc metallochlorophyll complexes of 26.7 ± 0.3% (**Tables 1 and 2**). By including the zinc in the packaging brine, the quantity of salt employed is reduced by half.

### EXAMPLE No. 8: STERILISED PRODUCT PREPARED IN THREE PHASES

In this example, the pheophytinisation treatment is performed in a first phase by means of a biotechnological fermentation process, and in a second phase the treatment of the vegetal products with at least one divalent metal compound is performed simultaneously with the treatment of the vegetal products with the solution that maintains the pH of the vegetal products at a value above 5.

**Raw material:** A 5-kg batch of olives of the *hojiblanca* variety was subjected to treatment with a solution of NaOH at 1.7% (w/v) containing 3% (w/v) of NaCl. The fruit/liquid ratio was 4:3 and the duration of the treatment was 6.5 hours. Subsequently, they were washed in water for 4 hours at the same fruit/liquid proportion.

**Phase 1. Stage A: pheophytinisation treatment by a biotechnological fermentation process:** Treatment of the raw material by means of a natural lactic-acid fermentation, performed in NaCl brine at an equilibrium concentration of 7%, during a period of 3 months, at a solid/liquid ratio of 4:3.

**Phase 2. Stages B and C: Treatment with zinc salt in a buffered base solution:** Treatment of the olives with a 0.1 M buffered solution of glycine-NaOH at a pH of 9.5, containing 0.2 g/L (200 ppm) of Zn (II) at a fruit/liquid ratio of 4:3 during 48 hours.

**Phase 3. Stages E and F: packaging in brine and heat sterilisation treatment.** Filling of 370-mL glass jars with approximately 200 g of fruits and approximately 150 mL of NaCl brine at 4% (w/v) at a solid/liquid ratio of 4:3, leaving an upper space of at least 2 mL, and technical heat sterilisation treatment for at least 15D (43 min. at 117°C).

The purpose of this example is to test the possibility of performing Stage A by means of a lactic-acid fermentation which lowers the pH to below 4, due to the generation of lactic acid caused by the fermentation of the sugars present in the olives.

This variant is of great interest for companies of the table olive sector, as the preparation of olives in the Spanish or Sevillian style by means of lactic-acid fermentation and their subsequent packaging in acid brine is one of the most widespread practices in the sector, which enables the availability of this type of product almost all the year round. By means of this biotechnological process, olives of a yellowish colour are obtained, with an a* coordinate of 2.43±0.05 and a percentage of pheophytinisation that reached 100% of the chlorophyll fraction. This result proves the efficacy of the lactic-acid fermentation process in "pheophytinising" the chlorophyll initially present in the olives. This may also be applicable to any type of green vegetable or fruit preserved by means of acid fermentation.

In this example, applied to olives, subsequent to the phase of adding zinc salt at a base pH, once the product was packaged it presented a significant improvement in the green colour after the heat treatment, materialised in a variation in the a* coordinate, which stood at -3.96±0.11, and a formation of zinc metallochlorophyll complexes of 41% **(Tables 1 and 2).**

### EXAMPLES 9 (A and B) and 10 (A and B)

In these examples, the pheophytinisation treatment is performed in a first phase by means of heating, and in a second phase the treatment of the vegetal products with at least one divalent metal compound is performed simultaneously with the treatment of the vegetal products with the solution that maintains the pH of the vegetal products at a value above 5.

**Raw material.** The invention is applied to the preparation of a typical green vegetable (green bean). In these examples, the embodiment of the pheophytinisation treatment (stage A) is a heat treatment, performed with two variants: **A**) physical treatment of boiling in water, and **B**) physicochemical treatment of boiling in water acidified with 0.125% of citric acid.

The fresh green beans were cut into pieces of about 3 cm and were washed in tap water. Next, approximately 400 g of the vegetal material was boiled in a basin containing 1.6 L of the boiling liquid, at a temperature of 95-97°C during 20 min.

### EXAMPLES Nos. 9A and 9B: PASTEURISED PRODUCT PREPARED BY DOUBLE BOILING IN THREE PHASES

In these examples, after the pheophytinisation stage, the product (200 g) was subjected to an additional boiling in a 0.1 M buffer mix of glycine/NaOH at a pH of 8, containing Zn (II) at a concentration of 0.2 g/L (200 ppm) and at a product/liquid ratio of 1:4, during 45 min. at 95-97°C. Finally, the product was packaged in a liquid consisting of acid brine at a pH of <4.6, and the heat pasteurisation treatment was performed.

**Phase 1. Stage A: pheophytinisation treatment by a physical heating process:** Blanching in water at 95-97°C with green beans, cut into pieces and washed, at a solid/liquid ratio of 1:4 for 20 min.

**Phase 2. Stages B and C: treatment with zinc salt in a buffered base solution.** Immersion of the fruits in a 0.1 M buffer mix of glycine/NaOH at a pH of 8, containing zinc acetate at a concentration of 0.2 g/L (200 ppm) and at a solid/liquid ratio of 1:4, for 45 minutes at 95-97°C.

**Phase** 3. **Stages E and F: packaging in brine and heat preservation treatment.** Filling of 370-mL glass jars with approximately 200 g of vegetal matter and approximately 150 mL of NaCl brine at 3% (w/v), containing 0.6% of lactic acid at a temperature of 70°C, followed by a heat pasteurisation treatment at 90°C for 15 min.

The entire performance of the process yields a correct stabilisation of the green colour, both in the product boiled in water (a* = -6.76±0.503) and that boiled in acidified water (a*=-5.85±0.11), reaching a percentage of Zn²⁺ metallochlorophyll complexes of 25.85 and 28.42% respectively **(tables 3 and 4 and** **figure 4****).**

Conversely, the product prepared in the traditional way, without the addition of zinc salt, by boiling in water, packaging in acidified brine and subsequent pasteurisation, presented a significant loss of green colour (a* = 1.41) due to the replacement of Mg²⁺ by 2H in the entirety of the chlorophyll pigments **(tables 3 and 4 and** **figure 4B****).**

These examples illustrate how the process of the present invention provides significant improvements with regard to other prior processes, as the complexing reaction of the pigments with the divalent metal being more efficient, an ideal fruit or vegetable product with a medium-low chorophyllic derivative content may be obtained, employing a much lower quantity of zinc than that employed in other processes. For example, in document US6004601A, a blanching solution with at least 500 ppm of zinc is used, with a vegetable:blanching solution ratio of 1:12; that is, 6000 mg of zinc for each kg of vegetables, while in the examples described herein 800 mg are used for each kg of vegetables (buffered base solution with 200 ppm in a vegetable:brine solution ratio of 1:4).

Neither is a combined addition of copper salts necessary, as indicated in document US 5114725 A. Thus, the green colour of the vegetal product is stabilised prior to the heat preservation treatment, enabling its packaging under acid conditions. To ensure the long-term safety of the product, a heat pasteurisation treatment is therefore sufficient, this being less aggressive than the required sterilisation applied in other patented processes (4473591; US 5114725 A; 5482727 and US6004601A), reducing to the maximum the issues concerning texture and cooked taste. The product obtained in these preferred embodiments contains 153±10% and 144±10% of the NRV per 100 g of product.

### EXAMPLES Nos. 10A and 10B: PASTEURISED PRODUCT PREPARED IN THREE PHASES

In this example, after the pheophytinisation stage, the product (200 g) was treated with a 0.1 M buffer mix of glycine/NaOH at a pH of 8, containing 0.2 g/L (200 ppm) of Zn (II) but reducing the solid:liquid ratio to 4:3 and maintaining the product at a controlled temperature of 60°C for 5 days. Finally, the original brine was replaced by an acid brine at a pH of < 4.6, and the heat pasteurisation treatment was performed.

**Phase 1. Stage A: pheophytinisation treatment by a physical heating process:** Blanching treatment of cut, washed green beans in water at 95-97°C, at a solid/liquid ratio of 1:4 during 20 min.

**Phase 2. Stages B and C: treatment with zinc salt in a buffered base solution.** Immersion of the vegetal matter in a 0.1 M buffer mix of glycine/NaOH at a pH of 8, containing zinc acetate at a concentration of 0.2 g/L (200 ppm) and at a solid/liquid ratio of 4:3, for 5 days at a controlled temperature of 60 ± 1°C.

**Phase 3. Stages E and F: packaging in brine and heat preservation treatment.** Filling of 370-mL glass jars with approximately 190 g of vegetal matter and approximately 130 mL of a NaCl brine at 3%, containing 0.6% (w/v) of lactic acid at a temperature of 70°C, and pasteurisation at 90°C for 15 min.

With this process, subsequent to Phase 1, a percentage of pheophytinisation of the chlorophyll fraction of the vegetal matter reaching 82.86% is achieved in the case of boiling in water, and 93.57% in the case of boiling in acidified water. The entire performance of the process yields a correct stabilisation of the green colour (**tables 3 and 4 and** **figure 4A**), both in the product boiled in water (a* = -5.81±0.23) and that boiled in acidified water (a*=-5.46±0.41), reaching a percentage of Zn²⁺ metallochlorophyll complexes of 33.03 and 32.35% respectively. However, the quantity of zinc incorporated differentiated the two embodiments. When the prior pheophytinisation stage is performed in water (example 10A), the zinc content (63.13±3.61 ppm) was lower than that obtained when the pheophytinisation is performed in acidified water (86.45± 2.62 ppm) (example 10B). In any case, in both embodiments a product is obtained with ideal organoleptic characteristics with no need to exceed 100% of the NRV per 100 g of product. By reducing the temperature at which the treatment with zinc salt is performed, likewise the solid:liquid ratio, one achieves, in addition to the advantages mentioned in the above examples (9A and 9B), a considerable reduction in the quantity of zinc employed, to 150 mg per kg of product (a solution of 200 ppm of zinc at a vegetable:brine ratio of 4:3) and also in the quantity of mineral that is incorporated into the product.

**Table 3: Chromatic coordinate a* in green beans processed according to different examples of the invention.**

| **Sample** | **Stages of the invention¹⁾** | | | | | | | | **a*** |
|---|---|---|---|---|---|---|---|---|---|
| **FGB²⁾** | | | | | | | | | -10.51±0.36 |

| | **A** | | | **B** | **C** | **D** | **E** | **F** | |
|---|---|---|---|---|---|---|---|---|---|
| | **BOIL** | **pH of the vegetable** | | | | | | | |
| | | **initial** | **final** | | | | | | |
| **BGBC** | **A** | 5.8 | 5.8 | - | - | - | - | - | -3.03±0.16 |
| | **B** | 5.8 | 4.5 | - | - | - | - | - | -2.19±0.18 |
| **BPGBC** | A | 5.8 | 5.8 | - | | | P | | 1.41±0.17 |
| | B | 5.8 | 4.5 | - | | | P | | 1.59±0.42 |
| **Ex. 9A** | A | 5.8 | 5.8 | BBS pH 8 + 200 ppm of Zn²⁺ at 95-97°C during 45 min. (1:4) | | No | P | | -6.76±0.50 |
| **Ex. 9B** | B | 5.8 | 4.5 | | | No | P | | -5.85±0.11 |
| **Ex. 10A** | A | 5.8 | 5.8 | BBS pH 8 + 200 ppm of Zn²⁺ during 5 days at 60°C (4:3) | | No | P | | -5.81±0.81 |
| **Ex. 10B** | B | 5.8 | 4.5 | | | No | P | | -5.46±0.80 |

**Table 4: Percentage of chlorophyll pigments with Mg, with 2H and with Zn, and zinc content, in green beans processed in accordance with different examples of the invention, as described in table 3.**

| **Sample** | **Chlorophyll pigment (%)** | | | **Zinc content (ppm)** |
|---|---|---|---|---|
| | **with Mg** | **with 2H⁺** | **with Zn²⁺** | |
| **FGB²⁾** | 98.23±3.31 | 1.77±0.88 | | Nd |
| | | | | |
| | | | | |
| **BGBC** | 17.1±1.6 | 82.96±9.4 | 0 | Nd |
| | 6.4±1.2 | 93.67±4.4 | 0 | |
| **BPGBC** | 0 | 100.0±0.0 | 0 | 2.8±0.1 |
| | 0 | 100.0±0.0 | 0 | |
| **Ex. 9A** | 0 | 74.25±7.2 | 25.95±2.9 | 152.8±10.3 |
| **Ex. 9B** | 0 | 71.6±8.6 | 28.4±3.7 | 144.2±10.0 |
| **Ex. 10A** | 3.29±0.9 | 63.8±6.6 | 33.0±6.8 | 63.1±3.6 |
| **Ex. 10B** | 2.4±0.5 | 65.2±4.2 | 32.3±3.6 | 86.55±2.6 |

Wherein (for tables 3 and 4): 1) Stages of the invention. A: pheophytinisation treatment; B: treatment with zinc salt; C: treatment with a solution at pH > 5; D: washes; E: packaging in brine; F: heat preservation treatment; 2) Abbreviations. FGB: fresh green bean; BGBC: boiled green bean control; BPGBC: boiled and pasteurised green bean control; BOIL: Boiling during 20 min. at 95-97°C at a solid:liquid proportion (1:4); A: in water at a pH of 7.6; B: in water + 0.125% citric acid (pH 2.77); BBS: 0.1 M glycine-NaOH buffered base solution; P: 15-minute pasteurisation at 90°C in NaCl brine at 3% with 0.6% lactic acid; Nd: Not determined.

## Claims

1. Process for the optimisation of the organoleptic properties of vegetal products containing chlorophyll pigments, comprising the following stages:
- pheophytinisation treatment of the vegetal products for the replacement of Mg by 2H in at least 10% of the chlorophyll compounds, wherein said treatment is a heat, biochemical or chemical treatment, wherein the chemical treatment does not comprise the use of a buffered acid solution;
- treatment of the vegetal products with a solution at a pH of between 5 and 12, to maintain the pH of the vegetal products at a value of over 5, and
- treatment of the vegetal products with at least one divalent metal compound selected from among Ca, Fe, Mn and Zn or combinations thereof, for the formation of divalent metal chlorophyll - complexes.

2. Process for the optimisation of the organoleptic properties of vegetal products containing chlorophyll pigments, according to claim 1, **characterised in that** the organoleptic property to be optimised is the green colour.

3. Process according to claims 1 or 2, wherein the vegetal products are selected from among fruits and/or vegetables containing chlorophyll pigments, such as table olives, peas, artichokes, chard, capers, cabbage, spinach, garlic sprouts, cardoons, turnip tops, broad beans, green beans, green asparagus, green peppers, broccoli, gherkins, avocados, plums, kiwis, apples, pears and grapes.

4. Process according to claim 3, wherein the vegetal products to which the process is applied are unprocessed, selected from among whole and fresh, whole and peeled, cut into pieces, shredded or frozen.

5. Process according to claim 3, wherein the vegetal products to which the process is applied are processed and dried, processed in vinegar, oil, salt or brine, prepared as preserves by heat treatment, fruit and vegetable preserves and/or derivatives, or combinations thereof.

6. Process according to any of the claims 1 to 5, wherein the pheophytinisation treatment is performed during a period of between 3 years and 5 minutes, and prior to the treatment with the solution that maintains the pH of the vegetal products at a value above 5.

7. Process according to any of the claims 1 to 6, wherein the vegetal products are maintained at a pH of between 5 and 8.

8. Process according to any of the claims 1 to 7, wherein the treatment of the vegetal products with the solution that maintains the pH of the vegetal products at a value above 5 is performed prior to the treatment of the vegetal products with at least one divalent metal compound.

9. Process according to any of the claims 1 to 7, wherein the treatment of the vegetal products with the solution that maintains the pH of the vegetal products at a value above 5 and the treatment of the vegetal products with at least one divalent metal compound are performed simultaneously.

10. Process according to any of the claims 1 to 7, wherein the treatment of the vegetal products with the solution that maintains the pH of the vegetal products at a value above 5 is performed subsequent to the treatment of the vegetal products with at least one divalent metal compound.

11. Process according to any of the claims 1 to 5, wherein the pheophytinisation treatment and the treatment of the vegetal products with at least one divalent metal compound are performed simultaneously.

12. Process according to claim 11, wherein the treatment of the vegetal products with the solution that maintains the pH of the vegetal products at a value above 5, the pheophytinisation treatment and the treatment of the vegetal products with at least one divalent metal compound are performed simultaneously.

13. Process according to claim 11, wherein the treatment of the vegetal products with the solution that maintains the pH of the vegetal products at a value above 5 is performed subsequent to the simultaneous performance of the pheophytinisation treatment and the treatment of the vegetal products with at least one divalent metal compound.

14. Process according to any of the claims 1 to 13, wherein the pheophytinisation treatment is a heat treatment.

15. Process according to claim 14, wherein the heat treatment is a heating of the vegetal products at a temperature of between 50-100°C, during a period of time of between 1 and 90 minutes.

16. Process according to claim 15, wherein the heating is performed in a medium selected from either water or an aqueous solution with or without food-grade acid, or by means of steam, dry heat, microwave, infra-red, radiofrequency or dielectric heating.

17. Process according to claims 14 to 16, wherein the heat treatment is performed with the vegetal products maintained at a pH below 6.

18. Process according to any of the claims 1 to 13, wherein the pheophytinisation treatment is a biochemical process.

19. Process according to claim 18, wherein the biochemical process is a fermentation by lactic acid bacteria performed while maintaining the vegetal product under anaerobic conditions, during a period of time exceeding 4 days, or until a pH value below 5 is reached.

20. Process according to claim 19, wherein the preservation of the vegetal product is performed by means of the addition of salt at a concentration of at least 2.5% with regard to the weight of the vegetal product.

21. Process according to claim 19, wherein the preservation of the vegetal product is performed by means of the addition of a brine with a concentration of at least 0.25 g per litre, with or without the addition of food-grade acids or other food additives.

22. Process according to any of the claims 1 to 13, wherein the pheophytinisation treatment is a chemical treatment.

23. Process according to claim 22, wherein the chemical treatment is a treatment with an acid solution.

24. Process according to claim 23, wherein the acid solution is selected from among the following acids: acetic, ascorbic, benzoic, citric, hydrochloric, lactic, malic, propionic or succinic, and their salts, or combinations of the same.

25. Process according to claims 23and 24, **characterised in that** the treatment with the acid solution consists of placing the vegetal products in contact with the solution at a concentration equal to or greater than 0.1 mM, during a period of time of between 1 minute and 2 years, at a temperature between 4°C and 100°C.

26. Process according to any of the claims 1 to 25, wherein the divalent metal compound is a zinc compound.

27. Process according to claim 26, wherein the zinc compound is a zinc salt selected from among zinc acetate, zinc bisglycinate, zinc chloride, zinc citrate, zinc stearate, zinc gluconate, zinc lactate, zinc oxide, zinc carbonate, zinc sulphate, or combinations thereof.

28. Process according to any of the claims 26 or 27, **characterised in that** the treatment with the zinc salt consists of placing the vegetal products in contact with a zinc salt solution at a concentration of between 0.005 and 3 g/L, during a period of time of between 5 min and 1 year, at a temperature between 4°C and 150°C.

29. Process according to any of the claims 1 to 28, **characterised in that** the solution at a pH of between 5 and 12, employed to maintain the pH of the vegetal products at a value above 5, is selected from among sodium, potassium, ammonium or magnesium hydroxide or carbonate, or combinations thereof, or a boric-borate, glycine-glycinate, phosphoric-phosphate, carbonic-carbonate buffered solution, or combinations thereof.

30. Process according to claim 29, **characterised in that** the treatment with the solution at a pH of between 5 and 12, employed to maintain the pH of the vegetal products at a value above 5, consists of placing, at least once, the vegetal products in contact with the solution at a concentration equal to or greater than 0.1 mM, during a period of time of between 5 min. and 1 year, at a temperature of between 4°C and 150°C.

31. Process according to any of the claims 1 to 30, **characterised in that** it further includes at least one of the following stages:
- washing the vegetal products
- drying
- slicing or shredding the vegetal products
- extraction of the oil or juice
- packaging in brine, in an inert atmosphere or vacuum-packing
- addition of aromas and/or other food additives and/or ingredients
- heat sterilisation or pasteurisation treatment.

32. Vegetal products obtained by means of a process as defined in any of claims 1 to 31, **characterised in that** they present a percentage of divalent metal chlorophyll - complexes, with regard to the total quantity of chlorophyll compounds, of between 15% and 100%, the divalent metal being selected from among Ca, Fe, Mn and Zn, or combinations of the same.

33. Vegetal products according to claim 32, **characterised in that** the chlorophyll - divalent metal complexes are Zn - chlorophyll complexes present in a percentage of between 15% and 100%, and **in that** the vegetal products present a Zn content of between 0.3% and 0.0005%.

34. Vegetal products according to claim 33, **characterised in that** the Zn content in the packaged product is between 0.01% and 0.002%.

35. Vegetal products according to any of the claims 32 to 34, wherein the vegetal products are whole, whole and peeled, sliced, shredded or frozen, prepared and dried, prepared in vinegar, oil, salt or brine, prepared as preserves by means of heat treatment, fruit and vegetable preserves and/or derivatives, or combinations thereof.

36. Vegetal products according to claim 35, wherein the vegetal products employed in the process are green beans.

37. Vegetal products according to claim 35, wherein the vegetal products employed for the application of the process are selected from between green table olives processed by means of alkaline treatment and with or without lactic acid fermentation, and green table olives processed *au naturel,* with or without lactic acid fermentation.
